# EUROPÄISCHE PATENTANMELDUNG

(11) **EP 0 947 310 A1**
(43) Veröffentlichungstag der Anmeldung: **06.10.1999**
(21) Anmeldenummer: 98122275.5
(22) Anmeldetag: 24.11.1998
(51) Int. Cl.: B29C 70/52, B29B 15/12

(54) **Verfahren und Vorrichtung zur Herstellung von endlosen Verbundwerkstoffen**

(30) Priorität: 04.04.1998 DE 19815184
(71) Anmelder: Otto Bock Orthopädische Industrie Besitz- und Verwaltungs-Kommanditgesellschaft, 37115 Duderstadt (DE)
(72) Erfinder: Deinert, Jürgen, 37115 Duderstadt (DE); Segl, Maximilian, 37434 Gieboldehausen (DE); Trutwig, Leonhard, 37115 Duderstadt (DE)
(74) Vertreter: Gramm, Werner, Prof. Dipl.-Ing.

(57) **Zusammenfassung**

Die Erfindung betrifft ein Verfahren sowie eine Vorrichtung zur Herstellung von endlosen Verbundwerkstoffen aus unidirektionalen Verstärkungsfasern und thermoplastischen Kunststoffen, wobei das in Längsrichtung bewegte Bündel paralleler endloser Verstärkungsfasern vorgewärmt und mit kontinuierlich zugeführter Thermoplastschmelze imprägniert wird, worauf der so gebildete endlose Verbundwerkstoff abgekühlt wird. Zur Verbesserung des Imprägniervorganges wird erfindungsgemäß vorgeschlagen, daß die Thermoplastschmelze eine längliche Imprägnierstrecke bildet, in die zur Verminderung der Schmelzeviskosität kontinuierlich mechanische Energie eingetragen wird, und daß das vorgewärmte Faserbündel kontinuierlich durch die Zone verminderter Schmelzeviskosität gezogen wird.

## Beschreibung

Die Erfindung betrifft ein Verfahren zur Herstellung von endlosen Verbundwerkstoffen aus unidirektionalen Verstärkungsfasern und thermoplastischen Kunststoffen, wobei das in Längsrichtung bewegte Bündel paralleler endloser Verstärkungsfasern vorgewärmt und mit kontinuierlich zugeführter Thermoplastschmelze imprägniert wird, worauf der so gebildete endlose Verbundwerkstoff abgekühlt wird.

Die Erfindung betrifft ferner eine Vorrichtung zur Durchführung eines derartigen Verfahrens.

Ein derartiges Verfahren läßt sich der DE 41 12 129 A1 entnehmen. Hier wird auf das bewegte Faserbündel von einem festen Punkt aus geschmolzener thermoplastischer Kunststoff aufgebracht; das Faserbündel wird dann mit dem thermoplastischen Kunststoff imprägniert, wobei höchstens 3 Gew.-% des Kunststoffes abgestreift werden dürfen.

Die EP 0 102 159 B1 offenbart ein vergleichbares Verfahren, bei dem zur Herabsetzung der Schmelzeviskosität viskositätsvermindernde Zusatzstoffe verwendet werden.

Die EP 0 287 427 B1 sowie die EP 0 415 517 A1 offenbaren Verfahren, bei denen die Faserbündel zur Imprägnierung über Schikanen gezogen werden, in deren Bereich der Austritt der Thermoplastschmelze liegt.

Der Erfindung liegt die Aufgabe zugrunde, das eingangs beschriebene Verfahren hinsichtlich des erreichbaren Imprägniergrades und seiner Imprägniergeschwindigkeit zu verbessern und hierfür eine geeignete Vorrichtung zu entwickeln.

Ausgehend von dem eingangs beschriebenen Verfahren wird diese Aufgabe gemäß der Erfindung dadurch gelöst, daß die Thermoplastschmelze eine längliche Imprägnierstrecke bildet, in die zur Verminderung der Schmelzeviskosität kontinuierlich mechanische Energie eingetragen wird, und daß das vorgewärmte Faserbündel kontinuierlich durch die Zone verminderter Schmelzeviskosität gezogen wird.

Hinsichtlich einer Vorrichtung zur Durchführung dieses Verfahrens wird die Aufgabe erfindungsgemäß gelöst durch ein beheiztes geschlossenes Imprägnierwerkzeug mit zumindest einer Einführtülle für das zu imprägnierende Faserbündel, einem die Einführtülle mit einem Auslaß verbindenden, die längliche Imprägnierstrecke bildenden, zumindest weitgehend mit der Thermoplastschmelze befüllten Führungskanal, mit zumindest einer in diesen Führungskanal mündenden Zuführleitung für die Thermoplastschmelze und mit zumindest einem beweglichen, die Thermoplastschmelze im Führungskanal mit mechanischer Energie beaufschlagenden Scherelement.

Erfindungsgemäß wird somit die Beaufschlagung des Faserbündels mit der Thermoplastschmelze dezentralisiert. Zur Beschleunigung und Verbesserung der Imprägnierung wird die Schmelzeviskosität durch in die Schmelze eingebrachte Scherkräfte verringert. Auftrags- und Imprägnierzone werden erfindungsgemäß überlagert. Dabei ist es zur Lösung der genannten Aufgabe zweckmäßig, wenn in der Imprägnierstrecke zumindest einem Teil der Thermoplastschmelze eine Querströmung aufgezwungen wird. Dies kann vorrichtungsmäßig dadurch erzielt werden, daß in der Wandung des Führungskanals Ausbuchtungen vorgesehen sind.

Erfindungsgemäß wird zum Einbringen der mechanischen Energie in die Thermoplastschmelze zumindest ein bewegliches Scherelement verwendet, das extern angetrieben oder aber von dem an ihm vorbeigeführten Faserbündel in Drehung versetzt werden kann. Dabei ist es zweckmäßig, wenn das Faserbündel auf einer das zumindest eine Scherelement teilweise umschlingenden Imprägnierstrecke geführt wird.

Um einerseits hohe Scherkräfte in die Thermoplastschmelze einbringen zu können und andererseits die Verweilzeit der Thermoplastschmelze in dem Imprägnierwerkzeug zu verringern, sollte der die Imprägnierstrecke bildende Führungskanal möglichst schmal ausgebildet sein und das Faserbündel dicht an dem Scherelement vorbeiführen, wo sich die Herabsetzung der Schmelzeviskosität am stärksten auswirkt.

Im Vergleich zu dem Verfahren gemäß der DE 41 12 129 A1 läßt sich erfindungsgemäß durch die Dezentralisierung der Schmelzeaufgabe sowie durch die Überlagerung der Schmelzeaufgabe mit der Imprägnierung und durch die verminderte Schmelzeviskosität aufgrund der eingebrachten Scherung die Verweilzeit des Thermoplasten in dem Imprägnierwerkzeug verkürzen, wodurch verbesserte Werkstoffeigenschaften erreicht werden. Je nach eingesetzten Thermoplasten und Anteil an Verstärkungsfasern werden verbesserte Eigenschaften unter dynamischer Last oder erhöhte Schlagzähigkeiten erreicht. Ferner wird erfindungsgemäß die Imprägniergeschwindigkeit erhöht.

Gegenüber dem Verfahren gemäß der EP 0 102 159 B1 kann erfindungsgemäß auf das nachträgliche Verdampfen des im Stand der Technik erforderlichen Zusatzstoffes verzichtet werden. Erfindungsgemäß wird somit weniger Energie zur Imprägnierung benötigt. Zudem ist die Verweilzeit der Thermoplastschmelze unter erhöhter Temperatur bei dem erfindungsgemäßen Verfahren erheblich kürzer, was u.a. zu verbesserten Produkteigenschaften führt.

Auch gegenüber den Verfahren gemäß EP 0 287 427 B1 und 0 415 517 A1 führt das erfindungsgemäße Verfahren mit seiner Dezentralisierung des Schmelzeauftrags bei gleichzeitiger Herabsetzung der Schmelzeviskosität durch Scherung zu einer Verkürzung der Imprägnierzeit und somit bei gesteigerter Imprägniergüte entweder zu einer Erhöhung der Fadengeschwindigkeit oder aber einer Verkürzung der Verweilzeit. Da die Schergeschwindigkeit einen weit größeren Einfluß auf die Viskosität als die Schmelzetemperatur hat, kann sowohl die Schmelztemperatur herabgesetzt als auch die Imprägniergüte gesteigert werden.

Durch den erfindungsgemäßen mechanischen Energieeintrag in die Thermoplastschmelze und die dadurch herabgesetzte Viskosität der Thermoplastschmelze und die Steigerung der Querdurchströmung wird das im Werkzeug befindliche Faserbündel nicht mechanisch geschädigt. Offenbar übt ein Schmelzefilm an der Oberfläche der Faserbündel eine Schutzfunktion aus. Aufgrund dieses Effekts kann statt der bisher technisch umgesetzten statischen Prozeßführung durch Spreizung und Umlenkung in der Polymerschmelze ein dynamisches Konzept umgesetzt werden. Die hieraus resultierenden niedrigen Prozeßtemperaturen, kürzeren Verweilzeiten und verbesserte Imprägnierung wurden bisher mit einer Werkzeugkonfiguration für Thermoplaste mit einer Viskosität bei geringer Scherung von < 100 Pa s umgesetzt. Denkbar ist allerdings auch eine Auslegung für höherviskose Materialien.

Weitere Merkmale der Erfindung sind Gegenstand der Unteransprüche und werden in Verbindung mit weiteren Vorteilen der Erfindung anhand von Ausführungsbeispielen näher erläutert.

In der Zeichnung sind einige als Beispiele dienende Ausführungsformen der Erfindung schematisch dargestellt. Es zeigen:
- Figur 1: in einem lotrechten Schnitt ein Imprägnierwerkzeug mit einem scheibenförmigen Scherelement;
- Figur 2: in einer Darstellung gemäß Figur 1 ein Imprägnierwerkzeug mit einem als Zahnscheibe ausgebildeten Scherelement;
- Figur 3: in einer Darstellung gemäß Figur 2 ein Imprägnierwerkzeug mit Ausbuchtungen im Führungskanal;
- Figur 4: in einer Darstellung gemäß Figur 1 ein Imprägnierwerkzeug mit einem nockenförmigen Scherelement;
- Figur 5: in einer Darstellung gemäß Figur 1 ein Imprägnierwerkzeug mit zwei jeweils als Zahnscheibe ausgelegten Scherelementen;
- Figur 6: das Imprägnierwerkzeug gemäß Figur 5 mit verlegten Einführtüllen für das Faserbündel;
- Figur 7: in einer Darstellung gemäß Figur 5 ein Imprägnierwerkzeug mit zwei scheibenförmigen Scherelementen mit jeweils axialen und radialen Zuführleitungen für die Thermoplastschmelze und
- Figur 8: das Imprägnierwerkzeug gemäß Figur 2 um 90° gedreht und auf einem Einschneckenextruder montiert.

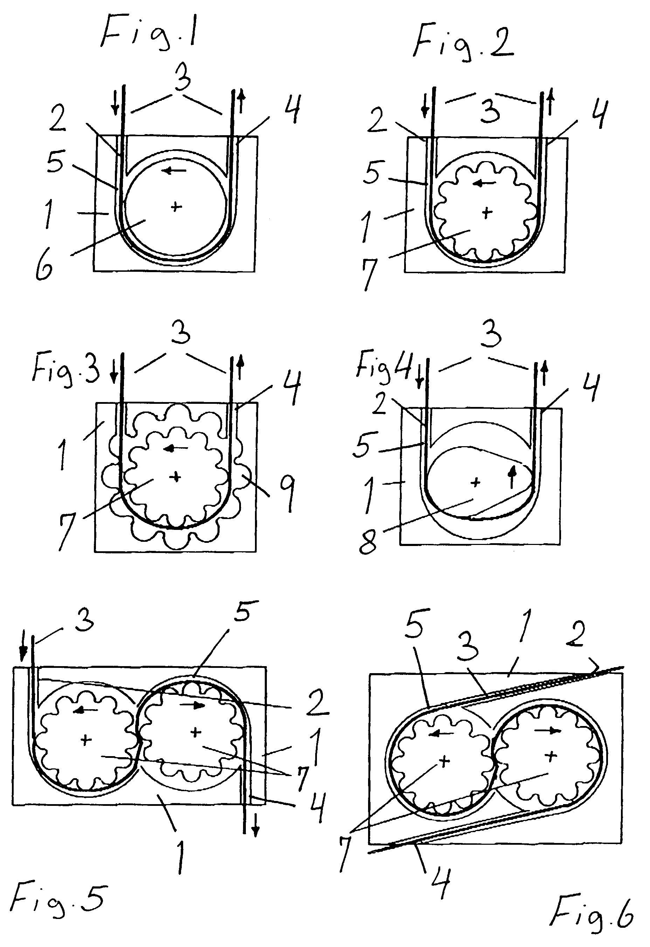

Figur 1 zeigt ein beheiztes Imprägnierwerkzeug 1 mit einer Einführtülle 2 für ein zu imprägnierendes Faserbündel 3, einem die Einführtülle 2 mit einem Auslaß 4 verbindenden, eine längliche Imprägnierstrecke bildenden, zumindest weitgehend mit einer Thermoplastschmelze befüllten Führungskanal 5 und mit einem in Richtung des eingezeichneten Pfeiles drehbaren, die Thermoplastschmelze im Führungskanal 5 mit mechanischer Energie beaufschlagenden Scherelement in Form einer kreisförmigen Scheibe 6.

Die Länge der Einführtülle 2 ist so dimensioniert, daß das zu imprägnierende Faserbündel 3 bei seiner Einführung in das Imprägnierwerkzeug 1 über Kontaktwärme bis auf zumindest angenähert die Temperatur der im Führungskanal 5 befindlichen Thermoplastschmelze vorgewärmt wird.

Die Laufrichtung des Faserbündels 3 ist durch die eingezeichneten Pfeile gekennzeichnet. Demnach ist die Förderrichtung im Auslaß 4 der in der Einführtülle 2 entgegengerichtet. Das Faserbündel 3 umschlingt die Scheibe 6 um etwa 180 Umfangsgrad und weist von der Umfangsfläche dieser von einem externen Antrieb kontinuierlich gedrehten Scheibe 6 einen vorzugsweise nur geringen lichten Abstand auf, um sich in der Zone verminderter Schmelzeviskosität zu bewegen, die durch den von der angetriebenen Scheibe 6 erzeugten mechanischen Energieeintrag in die Thermoplastschmelze hervorgerufen wird.

Die Ausführungsformen gemäß den Figuren 2 und 4 entsprechen im wesentlichen der der Figur 1, wobei das Scherelement in Figur 2 als Zahnscheibe 7 und in Figur 4 als nockenförmige Scheibe 8 ausgebildet ist. Dabei können die Scherelemente 7, 8 der Figuren 2 und 4 frei drehbar gelagert sein und von dem an ihnen vorbeigezogenen Faserbündel 3 in Drehung versetzt werden.

Das Imprägnierwerkzeug gemäß Figur 3 entspricht dem der Figur 2. Jedoch sind in der Wandung des Führungskanals 5 zusätzlich Ausbuchtungen 9 vorgesehen, durch die einem Teil der Thermoplastschmelze innerhalb des Führungskanals 5 eine Querströmung aufgezwungen wird.

Bei der Ausführungsform gemäß Figur 5 wird das Faserbündel 3 um zwei dicht nebeneinander angeordnete Zahnscheiben 7 so herumgeführt, daß die Einlaufrichtung des Faserbündels 3 seiner Auslaufrichtung entspricht.

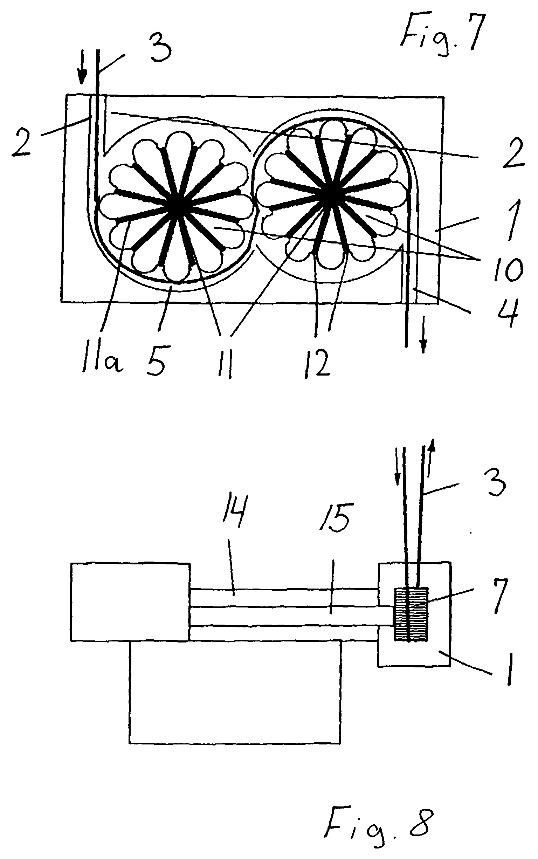

Bei der Ausführungsform gemäß Figur 6 wurden bei dem Imprägnierwerkzeug gemäß Figur 5 die Einführtülle 2 sowie der Auslaß 4 so verlegt, daß sich ein schräger Ein- bzw. Auslauf ergibt. Hierdurch wird die Verweilzeit des Faserbündels 3 im Imprägnierwerkzeug 1 bei gleicher Fadengeschwindigkeit verlängert. Außerdem wird bei jeder der beiden Zahnscheiben 7 der Umschlingungswinkel durch das Faserbündel 3 vergrößert.

Die Ausführungsform gemäß Figur 7 entspricht im wesentlichen der der Figur 5. Als Scherelemente sind hier zwei nebeneinander angeordnete Scheiben 10 vorgesehen, die für die Thermoplastschmelze jeweils eine axiale Zuführleitung 11 aufweisen, die zur Dezentralisierung des Schmelzeauftrages sternförmig zur Scherfläche der Scheibe 10 auslaufen, wobei die einzelnen Ausmündungen 12 in der die Scherfläche bildenden Umfangsfläche der Scheibe 10 vertieft angeordnet sind.

Figur 8 zeigt stark schematisiert einen Schneckenextruder 14, auf dessen Schnecke 15 das als Zahnscheibe 7 ausgebildete Scherelement eines Imprägnierwerkzeuges 1 angeflanscht ist.

## Patentansprüche

1. Verfahren zur Herstellung von endlosen Verbundwerkstoffen aus unidirektionalen Verstärkungsfasern und thermoplastischen Kunststoffen, wobei das in Längsrichtung bewegte Bündel paralleler endloser Verstärkungsfasern vorgewärmt und mit kontinuierlich zugeführter Thermoplastschmelze imprägniert wird, worauf der so gebildete endlose Verbundwerkstoff abgekühlt wird, **dadurch gekennzeichnet**, daß die Thermoplastschmelze eine längliche Imprägnierstrecke bildet, in die zur Verminderung der Schmelzeviskosität kontinuierlich mechanische Energie eingetragen wird, und daß das vorgewärmte Faserbündel kontinuierlich durch die Zone verminderter Schmelzeviskosität gezogen wird.

2. Verfahren nach Anspruch 1, **dadurch gekennzeichnet**, daß in der Imprägnierstrecke zumindest einem Teil der Thermoplastschmelze eine Querströmung aufgezwungen wird.

3. Verfahren nach Anspruch 1 oder 2, **dadurch gekennzeichnet**, daß zum Einbringen der mechanischen Energie zumindest ein bewegliches Scherelement verwendet wird.

4. Verfahren nach Anspruch 3, **dadurch gekennzeichnet**, daß das zumindest eine Scherelement extern angetrieben wird.

5. Verfahren nach Anspruch 3, **dadurch gekennzeichnet**, daß das zumindest eine Scherelement von dem an ihm vorbeigeführten Faserbündel in Drehung versetzt wird.

6. Verfahren nach einem der vorhergehenden Ansprüche, **dadurch gekennzeichnet**, daß das Faserbündel auf einer das zumindest eine Scherelement teilweise umschlingenden Imprägnierstrecke geführt wird.

7. Verfahren nach einem der vorhergehenden Ansprüche, **dadurch gekennzeichnet,** daß das Faserbündel um zwei Scherelemente herumgeführt wird.

8. Verfahren nach einem der vorhergehenden Ansprüche, **dadurch gekennzeichnet,** daß die Vorwärmung des Faserbündels über Kontaktwärme bei der Einführung in das Imprägnierwerkzeug erfolgt.

9. Vorrichtung zur Durchführung des Verfahrens nach einem der vorhergehenden Ansprüche, **gekennzeichnet** durch ein beheiztes geschlossenes Imprägnierwerkzeug (1) mit zumindest einer Einführtülle (2) für das zu imprägnierende Faserbündel (3), einem die Einführtülle (2) mit einem Auslaß (4) verbindenden, die längliche Imprägnierstrecke bildenden, zumindest weitgehend mit der Thermoplastschmelze befüllten Führungskanal (5), mit zumindest einer in diesen Führungskanal (5) mündenden Zuführleitung (11, 11a) für die Thermoplastschmelze und mit zumindest einem beweglichen, die Thermoplastschmelze im Führungskanal (5) mit mechanischer Energie beaufschlagenden Scherelement (6; 7; 8; 10).

10. Vorrichtung nach Anspruch 9, **dadurch gekennzeichnet,** daß das Scherelement frei drehbar oder mit einem externen Dreh antrieb versehen und als kreisförmige, nockenförmige oder als Zahnscheibe (6; 7; 8; 10) bzw. Zahnscheiben (7) ausgebildet ist.

11. Vorrichtung nach Anspruch 9 oder 10, **dadurch gekennzeichnet,** daß in der Wandung des Führungskanals (5) Ausbuchtungen (9) vorgesehen sind.

12. Vorrichtung nach Anspruch 9, 10 oder 11, **dadurch gekennzeichnet,** daß das Imprägnierwerkzeug (1) unterschiedlich positionierte Einführtüllen (2) aufweist.

13. Vorrichtung nach einem der Ansprüche 9 bis 12, **dadurch gekennzeichnet,** daß Zuführleitungen (11, 11a) für die Thermoplastschmelze im Außenumfang eines drehbaren Scherelementes (7; 10) ausmünden.

14. Vorrichtung nach Anspruch 13, **dadurch gekennzeichnet,** daß die Ausmündung (12) jeder Zuführleitung (11a) schlitzförmig quer zur Faserrichtung des vorbeigeführten Faserbündels (3) ausgebildet ist.

15. Vorrichtung nach Anspruch 14, **dadurch gekennzeichnet,** daß die Länge der schlitzförmigen Ausmündung (12) etwa der Breite des Faserbündels (3) entspricht.

16. Vorrichtung nach Anspruch 14 oder 15, **dadurch gekennzeichnet,** daß die Breite der schlitzförmigen Ausmündung maximal der halben Länge der schlitzförmigen Ausmündung (12) entspricht.

17. Vorrichtung nach Anspruch 13, 14, 15 oder 16, **dadurch gekennzeichnet,** daß bei einer das Scherelement bildenden Zahnscheibe (7) eine axiale Zuführleitung (11) sternförmig ausmündet.

18. Vorrichtung nach einem der Ansprüche 9 bis 17, **dadurch gekennzeichnet,** daß das drehbare Scherelement (7) mit der Schnecke (15) eines Schneckenextruders (14) in Drehverbindung steht.
